# EUROPÄISCHE PATENTSCHRIFT

(11) **EP 0 730 708 B1**
(45) Veröffentlichungstag und Bekanntmachung des Hinweises auf die Patenterteilung: **31.01.2001**
(21) Anmeldenummer: 95926372.4
(22) Anmeldetag: 03.08.1995
(51) Int. Cl.: F02M 69/54

(54) **DRUCKREGELVENTIL**
PRESSURE CONTROL VALVE
SOUPAPE DE REGULATION DE PRESSION

(30) Priorität: 27.08.1994 DE 4430472
(43) Veröffentlichungstag der Anmeldung: 11.09.1996
(60) Teilanmeldung: 99118298.1
(73) Patentinhaber: ROBERT BOSCH GMBH, 70442 Stuttgart (DE)
(72) Erfinder: KLEPPNER, Stephan, D-75015 Bretten (DE); SCHWEGLER, Helmut, D-74385 Pleidelsheim (DE); FRANK, Kurt, D-73614 Schorndorf (DE); BUESER, Wolfgang, D-71691 Freiberg (DE); LISKOW, Uwe, ROK-6381 Kyonggi-do (KR); DRUTU, Lorenz, D-70806 Kornwestheim (DE)
(86) Internationale Anmeldenummer: DE9501011
(87) Internationale Veröffentlichungsnummer: WO9607027

(56) Entgegenhaltungen:
- EP-A- 0 636 785
- US-A- 4 742 845
- US-A- 5 275 203
- PATENT ABSTRACTS OF JAPAN vol. 9 no. 25 (M-355) ,2.Februar 1985 & JP,A,59 170466 (TAKAYAMA TERUO) 26.September 1984,

## Beschreibung

### Stand der Technik

Die Erfindung geht aus von einem Druckregelventil nach der Gattung des Patentanspruchs 1. Es ist schon ein Druckregelventil bekannt (US-PS 5 078 167), das an einem Brennstoffilter einer Brennstoffversorgungsanlage für eine Brennkraftmaschine angeordnet ist und einen Grundkörper aufweist, in dessen mittlerem Bereich ein rohrförmiger Ventilsitzkörper mit einer Ventilsitzfläche befestigt ist. Zwischen dem Grundkörper und dem Ventilsitzkörper ist in ihrem mittleren Bereich eine Membran fest eingespannt, deren Umfang an einem Flansch des Grundkörpers eingespannt ist. In den Ventilsitzkörper ragt mit großem Spiel ein Brennstoffzuströmstutzen, der mit der Druckseite einer Brennstofförderpumpe verbunden ist. Der über den Brennstoffzuströmstutzen strömende Brennstoff gelangt teilweise in den Ventilsitzkörper und von diesem durch das Filtergewebe des Brennstoffilters und wirkt danach über eine Öffnung im Grundkörper auf eine Druckregelseite der Membran. Mit der der Druckregelseite der Membran abgewandten Rückströmseite der Membran ist ein Ventilschließkörper verbunden, der abgedichtet den Brennstoffzuströmstutzen umgibt und durch eine Bewegung der Membran auf diesem verschoben wird, um mehr oder weniger von der Ventilsitzfläche des Ventilsitzkörpers entgegen der Kraft einer an der Rückströmseite der Membran angreifenden Druckfeder abzuheben. Ein derartiges Druckregelventil ist sehr aufwendig gestaltet und besitzt aufgrund der durch die Abdichtung des Ventilschließkörpers am Brennstoffzuströmstutzen sich ergebende Reibung eine unerwünschte Hysterese und Regelungenauigkeit. Außerdem besitzt der Ventilschließkörper eine sehr große Masse, die durch die in ihrem mittleren Bereich und an ihrem Umfang gehäusefest an dem Grundkörper eingespannte Membran bewegt werden muß, wodurch ebenfalls die Reaktionsgeschwindigkeit des Druckregelventiles auf Druckänderungen beeinträchtigt wird.

Bekannt ist ebenfalls ein Druckregelventil (US-PS 4 300 510), das an einer Brennstoffverteilerleitung angeordnet ist. Dabei ist eine Membran des Druckregelventiles zwischen einem Ringflansch und einer Kappe an ihrem Umfang eingespannt und trägt in ihrem mittleren Bereich einen Ventilschließkörper, der mit einer ebenen Ventilsitzfläche an einem in die Brennstoffverteilerleitung hineinragenden Ventilsitzkörper zusammenwirkt. Auf der dem Ventilsitzkörper abgewandten Seite der Membran stützt sich eine Druckfeder ab, die andererseits an der Kappe anliegt. Auf die dem Ventilsitzkörper abgewandte Seite der Membran wirkt außerdem der in der Luftansaugleitung herrschende Druck der Brennkraftmaschine. Ein derartiges Druckregelventil hat den Nachteil, daß die durch die Membran zu bewegenden Massen noch relativ groß sind, wodurch die Reaktionsgeschwindigkeit bei Druckänderungen noch zu langsam ist.

In der nicht vorveröffentlichten EP-A-0 636 785 ist bereits ein Druckregelventil vorgeschlagen worden, das in einem Grundkörper ausgespannt eine Membran aufweist, die in ihrem mittleren Bereich ein Element mit einer Ventilsitzfläche trägt, die einen durch das Element und damit die Membran führenden Rückströmkanal umgibt. Auf das Element an der Membran ausgerichtet ist an dem Grundkörper ein Pfosten befestigt, der eine Lagerbohrung aufweist, in der eine als Ventilschließkörper dienende Kugel drehbar gelagert ist. Eine Druckfeder preßt das Element und damit die Ventilsitzfläche im geschlossenen Zustand des Druckregelventiles gegen eine Abflachung der Kugel. Die Lagerung der Kugel in dem Pfosten erfordert nicht nur ein zusätzliches Bauteil, sondern auch dessen zusätzliche Befestigung im Grundkörper, wozu zusätzlicher Bauraum und Aufwand erforderlich ist. Außerdem kommt es bei einer nicht ordnungsgemäßen Befestigung des Elementes zu Regelabweichungen. Bei einem weiteren Ausführungsbeispiel der EP-A-0 636 785 ist die als Ventilschließkörper dienende Kugel direkt in dem an der Membran befestigten Element drehbar gelagert und wirkt mit einer im Element vorgesehenen Ventilsitzfläche zusammen. Die Kugel ragt teilweise aus dem Element heraus und wird im geschlossenen Zustand des Druckregelventiles durch eine am Element angreifende Druckfeder gegen die Ventilsitzfläche und einen Vorsprung des Grundkörpers auf der Druckregelseite gepreßt.

Durch die JP-A-59170466 ist ein Druckregelventil bekannt, bei dem auf der Druckregelseite in einem Grundkörper ein Pfosten befestigt ist, an dem eine Kugel drehbar gelagert ist, die einen abgeflachten Ventilschließkörper trägt, der mit einer Ventilsitzfläche zusammenwirkt, die an einem mit der Membran verbundenen Element vorgesehen ist und einen Rückströmkanal zur Rückströmseite umgibt. Die Anordnung des Pfostens an dem Grundkörper bringt nicht nur zusätzlichen Befestigungsaufwand mit sich, sondern der Pfosten führt aufgrund seines Raumbedarfs zu einer unerwünschten Vergrößerung des Druckregelventiles. Ein nicht exakt befestigter Pfosten hat Regelungenauigkeiten zur Folge.

### Vorteile der Erfindung

Das erfindungsgemäße Druckregelventil mit den kennzeichnenden Merkmalen des Patentanspruches 1 hat demgegenüber den Vorteil, daß es ohne großen Aufwand auf einfache Art und Weise herstellbar ist, kompakt gebaut ist, genau den vorbestimmten Druck regelt und schneller auf Druckänderungen reagiert. Weiterhin ist das erfindungsgemäße Druckregelventil besonders geeignet zur Druckregelung in sogenannten "Returnless"-Brennstoffeinspritzsystemen, bei denen der durch die Brennstoffpumpe geförderte und nicht durch die Einspritzventile eingespritzte überschüssige Brennstoff unmittelbar stromabwärts der Brennstoffpumpe über das Druckregelventil wieder in den Brennstofftank zurückgeleitet wird. Die Hindurchführung des Rückströmkanales durch die Membran führt zu einer Verminderung der bewegten Massen und damit zu einer Verbesserung der Reaktionsgeschwindigkeit des Druckregelventiles. Die axiale Durchströmung bringt Einbauvorteile mit sich und ermöglicht eine bessere Integrierung in andere Aggregate.

Durch die in den abhängigen Patentansprüchen aufgeführten Maßnahmen sind vorteilhafte Weiterbildungen und Verbesserungen des im Patentanspruch 1 angegebenen Druckregelventiles möglich.

Besonders vorteilhaft ist es, als Ventilschließkörper eine Kugel zu verwenden, die in bekannter Weise mit hoher Präzision hergestellt werden kann. Dabei ist es ebenfalls vorteilhaft, diese Kugel abzuflachen, so daß sie eine ebene Dichtfläche aufweist, die mit einer durch die Membran bewegten ebenen Ventilsitzfläche zusammenwirkt.

Von Vorteil ist es, den Grundkörper als topfförmigen Blechkörper mit einem Boden auszubilden und aus dem Boden Haltezungen auszuformen, die in das Innere des Grundkörpers gebogen werden und den Ventilschließkörper zur Lagerung teilweise so umgreifen, daß er drehbar ist.

Ebenfalls vorteilhaft ist es, im mittleren Bereich der Membran einen Ventilsitzkörper vorzusehen, der die Ventilsitzfläche und einen von dieser zur Rückströmseite führenden Rückströmkanal aufweist.

Zusätzlich vorteilhaft ist es, daß die Kraft einer an der Rückströmseite der Membran angreifenden Rückstellfeder durch Verbiegen des Bodens des Grundkörpers oder eines Körpers erfolgt, an dem das der Membran abgewandte Ende der Rückstellfeder anliegt.

Besonders vorteilhaft ist es, die Membran federnd aus einem Metall auszubilden und direkt mit der Ventilsitzfläche und einem auf die Rückströmseite führenden Rückströmkanal zu versehen, wodurch sich der Fertigungsaufwand für das Druckregelventil und die zu bewegenden Massen besonders stark reduzieren lassen.

Zur Verminderung des Einflusses der Druckkraft des durch den Rückströmkanal abströmenden Brennstoffes auf die Membran ist es vorteilhaft, abgedichtet mit dem Ventilsitzkörper an der Rückströmseite der Membran ein dünnwandiges Rohr zu verbinden, das z. B. mit einer im Brennstofftank angeordneten Strahlpumpe an der Ansaugseite einer Brennstofförderpumpe in Verbindung steht.

Ebenfalls vorteilhaft ist es, wenn als Rückstellfeder an der Membran eine Zugfeder angreift, die als Schraubenfeder oder als blattfederförmige Zugfeder ausgebildet ist.

Eine vorteilhafte Ausbildung besteht ebenfalls darin, daß der Grundkörper als topfförmiger Kunststoffkörper mit einem Boden ausgebildet ist, an dem der Ventilschließkörper gelagert ist.

Weiterhin vorteilhaft ist es, die Membran am Umfang an dem Grundkörper aus Kunststoff mittels eines rohrförmigen Zwischenteiles aus Kunststoff einzuspannen und an dem Zwischenteil ein topfförmiges Deckelteil aus Kunststoff angreifen zu lassen, das relativ zum Zwischenteil axial bewegbar und an diesem fixierbar ist.

### Zeichnung

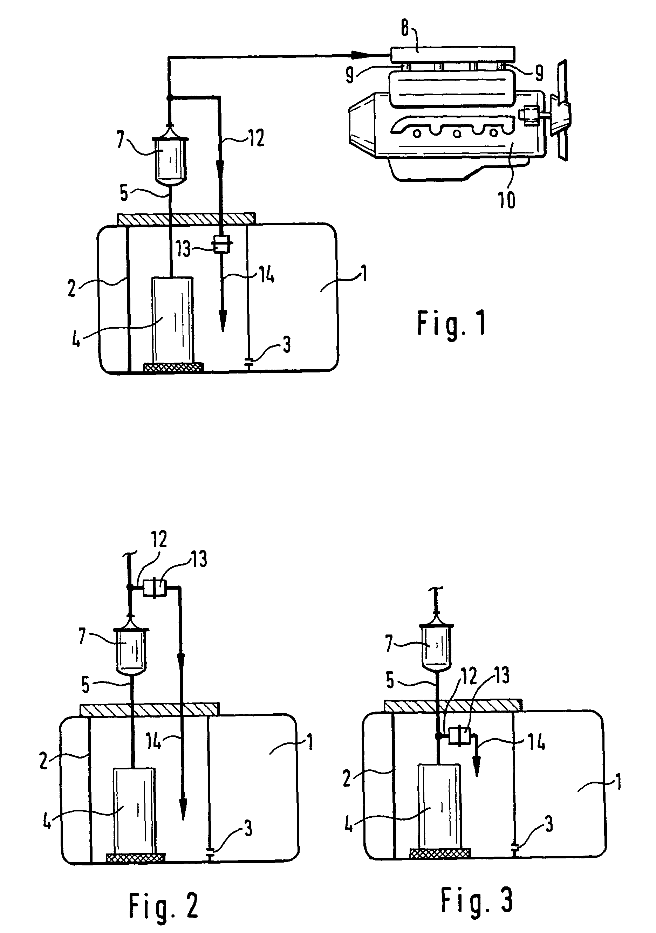

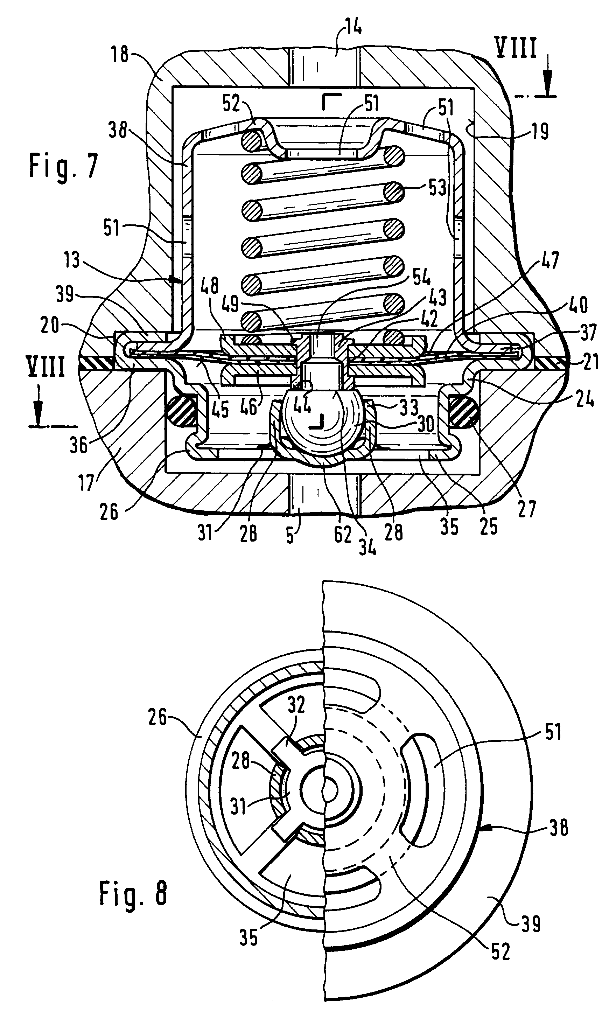

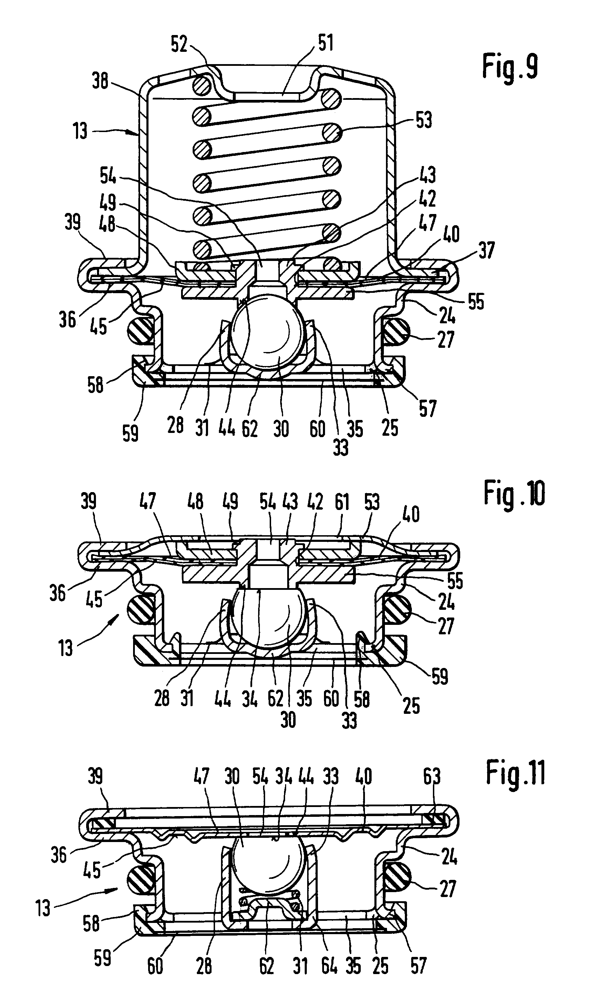

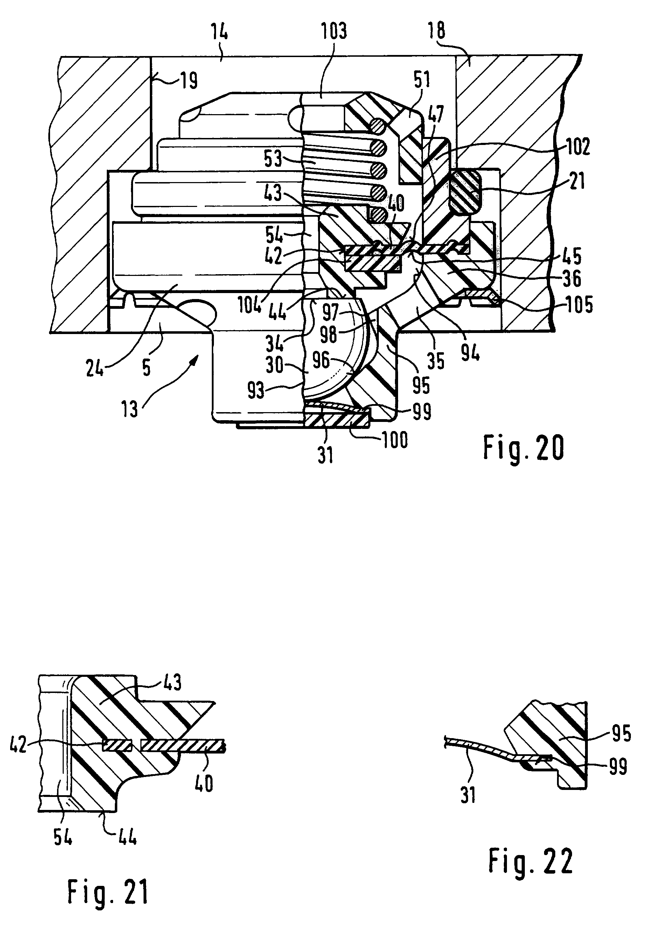

Ausführungsbeispiele der Erfindung sind in der Zeichnung vereinfacht dargestellt und in der nachfolgenden Beschreibung näher erläutert. Es zeigen Figuren 1 bis 6 verschiedene Anordnungen von Druckregelventilen in Brennstoffversorgungsanlagen von Brennkraftmaschinen, Figur 7 ein erstes Ausführungsbeispiel eines erfindungsgemäßen Druckregelventiles, Figur 8 einen Schnitt entlang der Linie VIII-VIII in Figur 7, Figuren 9 bis 20 ein zweites bis ein dreizehntes Ausführungsbeispiel eines erfindungsgemäßen Druckregelventiles, Figuren 21 und 22 Teildarstellungen des Druckregelventiles nach Figur 20.

### Beschreibung der Ausführungsbeispiele

In der Figur 1 ist mit 1 ein Brennstofftank bezeichnet, in den eine sogenannte Tankeinbaueinheit 2 eingesetzt ist, die über eine Ausgleichsöffnung 3 in der Wandung der Tankeinbaueinheit aus dem Brennstofftank 1 mit Brennstoff versorgt wird. In der Tankeinbaueinheit 2 ist eine Brennstoffpumpe 4 angeordnet, die beispielsweise durch einen Elektromotor angetrieben wird und Brennstoff in eine Brennstoffleitung 5 nach außerhalb des Brennstofftanks 1 liefert. Bei dem in Figur 1 dargestellten Ausführungsbeispiel liegt außerhalb des Brennstofftanks 1 bzw. der Tankeinbaueinheit 2 in der Brennstoffleitung 5 ein Brennstoffilter 7. Die Brennstoffleitung 5 mündet in einen sogenannten Brennstoffverteiler 8, von dem aus der Brennstoff in Einspritzventile 9 gelangt, die in den Brennstoffverteiler eingesetzt sind und von denen beispielsweise vier dargestellt sind. Die Einspritzventile 9 sind mit ihren einspritzseitigen Enden in jeweils ein Einzelsaugrohr eines Zylinders einer gemischverdichtenden fremdgezündeten Brennkraftmaschine 10 eingesetzt und spritzen Brennstoff in unmittelbarer Nähe der Einlaßventile der einzelnen Zylinder ab. Stromabwärts des Brennstoffilters 7 zweigt von der Brennstoffleitung 5 eine Zweigleitung 12 ab, die zur Tankeinbaueinheit zurückführt. In der Zweigleitung 12 liegt innerhalb der Tankeinbaueinheit 2 ein Druckregelventil 13, das den Brennstoffdruck in der Brennstoffleitung 5 stromaufwärts der Einspritzventile 9 konstant hält und über das der durch die Brennstoffpumpe 4 geförderte und nicht durch die Einspritzventile 9 eingespritzte überschüssige Brennstoff in die Tankeinbaueinheit 2 zurückgeleitet wird. Dabei gelangt der durch das Druckregelventil 13 abgeregelte Brennstoff entweder unmittelbar aus dem Gehäuse des Druckregelventiles 13 in die Tankeinbaueinheit 2 oder strömt über eine stromabwärts des Druckregelventiles 13 vorgesehene Rückströmleitung 14 in die Tankeinbaueinheit 2.

Das Ausführungsbeispiel nach Figur 2 weicht von dem Ausführungsbeispiel nach Figur 1 lediglich dadurch ab, daß das Druckregelventil 13 in der Zweigleitung 12 außerhalb der Tankeinbaueinheit 2 und des Brennstofftanks 1 liegt.

Die Figur 3 zeigt ein Ausführungsbeispiel, bei dem zwar wie bei dem Ausführungsbeispiel nach Figur 1 das Druckregelventil 13 innerhalb der Tankeinbaueinheit 2 liegt, jedoch zweigt die Zweigleitung 12 bei diesem Ausführungsbeispiel nach Figur 3 bereits unmittelbar stromabwärts der Brennstoffpumpe 4 innerhalb der Tankeinbaueinheit 2 von der Brennstoffleitung 5 ab. Eine derartige Ausgestaltung, wie auch die nach Fig. 1 oder 2, wird "Returnless"-System genannt, da hierbei ohne lange Rückströmleitungen der von der Brennstoffpumpe 4 geförderte überschüssige Brennstoff, der nicht durch die Einspritzventile 9 abgespritzt wird, auf möglichst kurzem Wege, also ohne längere Leitungen und damit auch ohne eine unerwünschte Erwärmung im Motorraum in den Brennstofftank zurückgeleitet wird. Auch bei den Ausführungsbeispielen nach den Figuren 1 und 2 kann noch von einem "Returnless"-System gesprochen werden, da auch hierbei die Rückströmung des überschüssigen Brennstoffes in der Nähe des Brennstofftanks 1 erfolgt.

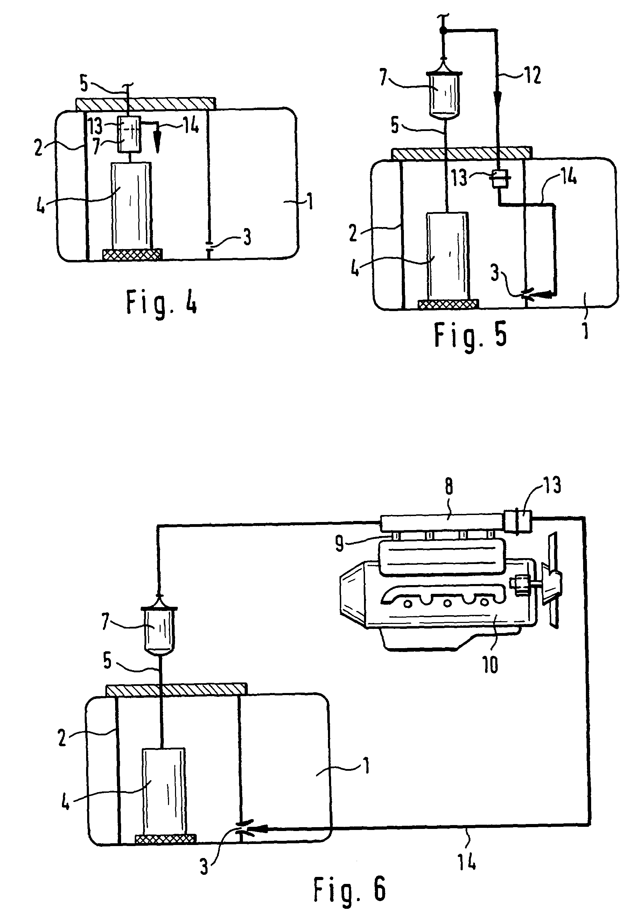

Die Figur 4 zeigt ebenfalls ein Ausführungsbeispiel einer als "Returnless"-System ausgebildeten Brennstoffversorgungsanlage, bei der unmittelbar stromabwärts der Brennstoffpumpe 4 innerhalb der Tankeinbaueinheit 2 auch der Brennstoffilter 7 angeordnet ist und an den Brennstoffilter 7 angebaut oder in den Brennstoffilter 7 integriert sowie innerhalb der Tankeinbaueinheit 2 liegend das Druckregelventil 13, so daß überschüssiger Brennstoff auf kürzestem Wege von der Brennstoffleitung 5 innerhalb der Tankeinbaueinheit 2 wieder auf die Saugseite der Brennstoffpumpe 4 zurückgeleitet wird.

Figur 5 zeigt ein Ausführungsbeispiel, bei dem ausgehend von dem Ausführungsbeispiel nach Figur 1 der von dem Druckregelventil 13 in die Rückströmleitung 14 abgeregelte überschüssige Brennstoff nicht direkt der Tankeinbaueinheit 2 zugeführt wird, sondern die Rückströmleitung 14 in einer als Strahlpumpe ausgebildeten Ausgleichsöffnung 3 endet, wie sie zur Befüllung derartiger Tankeinbaueinheiten bzw. an der Saugseite von Brennstoffpumpen bereits allgemein bekannt sind. Die in Figur 5 gezeigte Rückführung der Rückströmleitung 14 zu der Strahlpumpe 3 kann in entsprechender Weise auch bei den Ausführungsbeispielen nach den Figuren 2 bis 4 erfolgen.

Wie bei den bisherigen Ausführungsbeispielen, sind auch bei Figur 6 die gegenüber dem Ausführungsbeispiel nach Figur 1 gleichbleibenden und gleichwirkenden Teile durch die gleichen Bezugszeichen gekennzeichnet. In Figur 6 ist das Druckregelventil 13 stromabwärts des Brennstoffverteilers 8 angeordnet, vorzugsweise unmittelbar am Brennstoffverteiler 8, und die Rückströmleitung 14 vom Druckregelventil endet an der als Strahlpumpe ausgebildeten Ausgleichsöffnung 3 der Tankeinbaueinheit 2. Die Figuren 1 bis 6 zeigen nur einige der möglichen Anordnungen der in den folgenden Figuren beschriebenen Druckregelventile.

In der Figur 7 ist ein erstes Ausführungsbeispiel eines erfindungsgemäßen Druckregelventiles 13 dargestellt, das beispielsweise in einem aus einem Unterteil 17 und einem Oberteil 18 gebildeten Haltekörper angeordnet ist. Die Worte Oberteil und Unterteil werden hier nur zur besseren Unterscheidung zweier Teile verwendet. Das Oberteil und das Unterteil können beliebige Elemente verschiedener Aggregate sein. Unterteil 17 und Oberteil 18 umschließen eine sich in beide Teile erstreckende Aufnahmeöffnung 19, die an der Trennebene der beiden Teile 17, 18 durch eine Einspannöffnung 20 mit einem größeren Durchmesser in wenigstens einem der Teile unterbrochen wird. Zwischen dem Unterteil 17 und dem Oberteil 18 kann in der Trennebene beispielsweise eine elastische Dichtung 21 vorgesehen sein. Im Unterteil 17 führt die Brennstoffleitung 5 in die Aufnahmeöffnung 19, während im Oberteil 18 die Rückströmleitung 14 von der Aufnahmeöffnung 19 fortführt. Der aus den Teilen 17, 18 gebildete Trägerkörper kann als separates Teil ausgebildet sein, er kann jedoch auch Teil des Brennstofftanks 1, der Tankeinbaueinheit 2, der Brennstoffpumpe 4, des Brennstoffilters 7, des Brennstoffverteilers 8 oder eines anderen Aggregates der Brennstoffversorgungsanlage sein. Beim Einbau des Druckregelventils 13 innerhalb des Brennstofftanks 1 bzw. der Tankeinbaueinheit 2 kann auf ein geschlossenes Oberteil 18 verzichtet werde, da der abgeregelte Brennstoff unmittelbar vom Druckregelventil in die Tankeinbaueinheit 2 bzw. den Brennstofftank 1 zurückströmen kann.

Das Druckregelventil 13 hat einen als topfförmiger, gestufter Blechkörper ausgebildeten Grundkörper 24, der einen Boden 25 besitzt. Ausgehend vom Boden 25 ist eine Wulst 26 am Umfang des Grundkörpers 24 ausgebildet, die eine Nut für einen am Umfang des Grundkörpers angeordneten Dichtring 27 begrenzt. Der Dichtring 27 liegt außer am Umfang des Grundkörpers 24 ebenfalls an der Wandung der Aufnahmeöffnung 19 dichtend an und trennt somit den mit der Brennstoffleitung 5 verbundenen Teil der Aufnahmeöffnung 19 von dem mit der Rückströmleitung 14 verbundenen Teil der Aufnahmeöffnung 19. Aus dem Boden 25 sind wenigstens drei Haltezungen 28 ausgeformt und in das Innere des Grundkörpers 24 gebogen, wo sie eine Art Käfig zur Lagerung eines kugelförmig ausgebildeten Ventilschließkörpers 30 bilden. Dabei liegt der Ventilschließkörper am Boden 25 an, und die Haltezungen 28 sind etwas länger als der Radius des größer als eine Halbkugel ausgebildeten Ventilschließkörpers 30 und schließen mit ihren freien Enden 33 einen gedachten Kreis ein, der einen geringeren Durchmesser als den Durchmesser des kugelförmigen Ventilschließkörpers 30 hat. Zwischen den Haltezungen 28 und dem kugelförmigen Ventilschließkörper besteht allerdings ein solches Spiel, daß sich der kugelförmige Ventilschließkörper zwischen den Haltezungen 28 frei drehen aber nicht aus dem durch die Haltezungen gebildeten Käfig herausfallen kann. Eine aus ihrer Ebene herausgeformte blattfederförmige Spannfeder 31 mit beispielsweise vier Federzungen 32 ist zwischen dem Boden 25 des Grundkörpers 24 und dem kugelförmigen Ventilschließkörper 30 angeordnet und erzeugt eine geringe Federkraft auf den Ventilschließkörper 30, so daß er an den freien Enden 33 der Haltezungen 28 gehalten wird, wodurch vermieden wird, daß sich der Ventilschließkörper 30 bei auftretenden Erschütterungen ständig gegenüber den Haltezungen 28 bewegt, was zu unerwünschten Verschleißerscheinungen führt. Der kugelförmige Ventilschließkörper 30 ist abgeflacht und hat eine ebene Dichtfläche 34. Nach der Abflachung ist der kugelförmige Ventilschließkörper 30 noch größer als eine Halbkugel.

Dem Boden 25 abgewandt weist der Grundkörper 24 einen Kragen 36 auf, der ringförmig ist und auf dem eine Membran 40 oder mehrere übereinander angeordnete Membranen 40 mit dem Umfang aufliegt bzw. aufliegen. Auf der dem Kragen 36 gegenüberliegenden Seite der Membran 40 bzw. der Membranen 40 liegt am Umfang eine Ringschulter 37 einer topfförmigen Kappe 38 an. Ein sich an den Kragen 36 des Grundkörpers 24 anschließender Bördelrand 39 ist U-förmig über die Ringschulter 37 der Kappe 38 gebogen und erzeugt eine Einspannkraft, mit der der Umfang der Membran 40 bzw. der Membranen 40 zwischen dem Kragen 36 und der Ringschulter 37 fest eingespannt wird. Die Membran 40 ist derart geformt bzw. weist ein derartiges Material auf, daß sie nachgiebig bzw. elastisch ist. Die Membran 40 bzw. die Membranen 40 kann bzw. können aus Gummi, einem Gewebe mit Gummibeschichtung, Kunststoff oder Metall in Form dünner Folien gebildet sein.
Das Druckregelventil 13 ragt mit dem Kragen 36 bzw. dem Bördelrand 39 in die Einspannöffnung 20 zwischen dem Unterteil 17 und dem Oberteil 18 und wird darin gehalten.

Die Membran 40 hat in ihrem mittleren Bereich einen Durchbruch 42, durch den ein zylindrischer Ventilsitzkörper 43 gesteckt ist, der dem Ventilschließkörper 30 zugewandt eine ebene Ventilsitzfläche 44 hat. Auf einer dem Ventilschließkörper 30 zugewandten Druckregelseite 45 der Membran 40 liegt im mittleren Bereich der Membran eine Gegenscheibe 46 und auf einer der Kappe 38 zugewandten Rückströmseite 47 der Membran 40 liegt im mittleren Bereich der Membran ein Federteller 48 an. Fluchtend zum Durchbruch 42 der Membran 40 weisen ebenfalls die Gegenscheibe 46 und der Federteller 48 Durchbrüche auf, durch die der Ventilsitzkörper 43 hindurchgreift und mit einer sich in radialer Richtung erstreckenden Verformung 49 über den Federteller 48 ragt und in axialer Richtung eine Spannkraft erzeugt, die den Ventilsitzkörper 43, die Gegenscheibe 46 und den Federteller 48 an der Membran 40 in axialer Richtung gegeneinander dichtend verspannt. Auf der dem Ventilschließkörper 30 zugewandten Seite überagt der Ventilsitzkörper 43 mit einem Ringrand radial die Gegenscheibe 46.

Die Kappe 38 hat wenigstens eine Abströmöffnung 51, die im Kappenboden 52 vorgesehen sein kann und/oder im zylindrischen Mantelteil der Kappe. An dem Kappenboden 52 stützt sich eine als Druckfeder ausgebildete Rückstellfeder 53 ab, die ebenfalls am Federteller 48 angreift und damit die Membran 40 und den Ventilsitzkörper 43 in Richtung zum Ventilschließkörper 30 beaufschlagt. Die Federkraft der Rückstellfeder 53, die den zu regelnden Druck des Brennstoffes bestimmt, kann durch axiales Eindrücken bzw. Herausziehen des Bodens 25 des Grundkörpers 24 in einem zentralen Anlagebereich 62 und/oder des Kappenbodens 52 erfolgen. Wird der vorbestimmte Brennstoffdruck auf der Druckregelseite 45 der Membran 40 überschritten, so hebt die Membran 40 den Ventilsitzkörper 43 vom Ventilschließkörper 30 ab und Brennstoff strömt entlang der Dichtfläche 34 sowie der Ventilsitzfläche 44 und von dort über einen im Ventilsitzkörper 43 ausgebildeten Rückströmkanal 54 auf die Rückströmseite 47 der Membran in das Innere der Kappe 38. Durch die Abströmöffnungen 51 in der Kappe 38 kann bei Weglassung des Oberteils 18 der Brennstoff auch direkt in den Brennstofftank 1 bzw. die Tankeinbaueinheit 2 zurückströmen, wenn das Druckregelventil 13 dort eingebaut ist.

Durch das Ausformen der Haltezungen 28 werden im Boden 25 des Grundkörpers 24 Einströmöffnungen 35 gebildet, über die der von der Brennstoffleitung 5 in die Aufnahmeöffnung 19 gelangende Brennstoff in das Innere des Grundkörpers 24 strömt. Die zwischen den Einströmöffnungen 35 im Boden 25 verbleibenden Stege verleihen dem zentralen Anlagebereich 62 des Bodens, in dem der Ventilschließkörper 30 gelagert ist, die Möglichkeit, diesen zentralen Anlagebereich mit geringen Kräften plastisch zu verformen.

Die Figur 8 zeigt eine Draufsicht auf das Druckregelventil nach Figur 7 entlang der Linie VIII-VIII.

Der Ventilsitzkörper 43, die Gegenscheibe 46 und der Federteller 48 können aus Metall gefertigt sein, aus einem geeigneten Kunststoff oder auch aus einem anderen Material, z. B. Keramik.

Bei den in den folgenden Figuren 9 bis 22 beschriebenen Ausführungsbeispielen von erfindungsgemäßen Druckregelventilen werden die gegenüber den in den Figuren 7 und 8 gleichbleibenden und gleich wirkenden Teile der Druckregelventile durch die gleichen Bezugszeichen gekennzeichnet. Für diese gleichen und gleichwirkenden Teile wird ausdrücklich Bezug genommen auf die Beschreibung zu den Figuren 7 und 8, so daß auf eine erneute Beschreibung verzichtet wird. Das in der Figur 9 dargestellte Ausführungsbeispiel eines Druckregelventiles unterscheidet sich von dem Druckregelventil nach Figur 7 im wesentlichen nur dadurch, daß der Ventilschließkörper 30 als vollständige Kugel ausgebildet ist, die also keine Abflachung als Dichtfläche hat, und die Ventilsitzfläche 44 am Ventilschließkörper ebenfalls nicht eben ist, sondern konisch oder sphärisch geformt. Der Ventilsitzkörper 43 ist auf seiner an der Druckregelseite 45 der Membran anliegenden Seite einstückig mit einem Scheibenrand 55 versehen, so daß die beim Druckregelventil nach Figur 7 vorgesehene Gegenscheibe 46 entfällt. Ventilsitzkörper 43 und Federteller 48 können wieder aus Kunststoff, Metall oder einem anderen Material bestehen. Am Boden 25 des Grundkörpers 24 sind am Übergang zum zylindrischen Mantelbereich Rastzungen 57 ausgeformt und radial nach außen gebogen. Diese Rastzungen 57 hintergreifen Rastnasen 58 eines ringscheibenförmigen Filterkörpers 59, an dem Filtergewebe 60 ausgespannt ist, das die Einströmöffnungen 35 außerhalb des Grundkörpers 24 überdeckt. Durch diesen Filter 59, 60 wird verhindert, daß im Brennstoff mitgeführte Partikel in den Bereich zwischeen Ventilschließkörper 30 und Ventilsitzfläche 44 gelangen und diese Flächen beschädigen bzw. sich dort einklemmen, so daß die Funktion des Druckregelventiles beeinträchtigt wird.

Bei dem Ausführungsbeispiel nach Figur 10 ist ebenfalls ein Filter 59, 60 vorgesehen, dessen Rastnasen 58 jedoch die Einströmöffnungen 35 durchgreifen und den Boden 25 des Grundkörpers 24 innen hintergreifen, so daß keine Rastzungen 57 wie beim Ausführungsbeispiel nach Figur 9 erforderlich sind. Außerdem ist auch keine Kappe vorgesehen. Die Rückstellfeder 53 ist bei diesem Ausführungsbeispiel streifen- oder ringförmige als Blattfeder ausgebildet, die an ihrem Umfang mit der Membran 40 durch den Bördelrand 39 am Grundkörper 24 eingespannt ist und sich radial nach innen so weit erstreckt, daß sie am Federteller 48 angreift und eine Durchströmöffnung 61 für den aus dem Rückströmkanal 54 ausströmenden Brennstoff begrenzt. Die Verwendung einer Blattfeder als Rückstellfeder ermöglicht eine sehr kurze Ausbildung des Druckregelventils 13 in axialer Richtung.

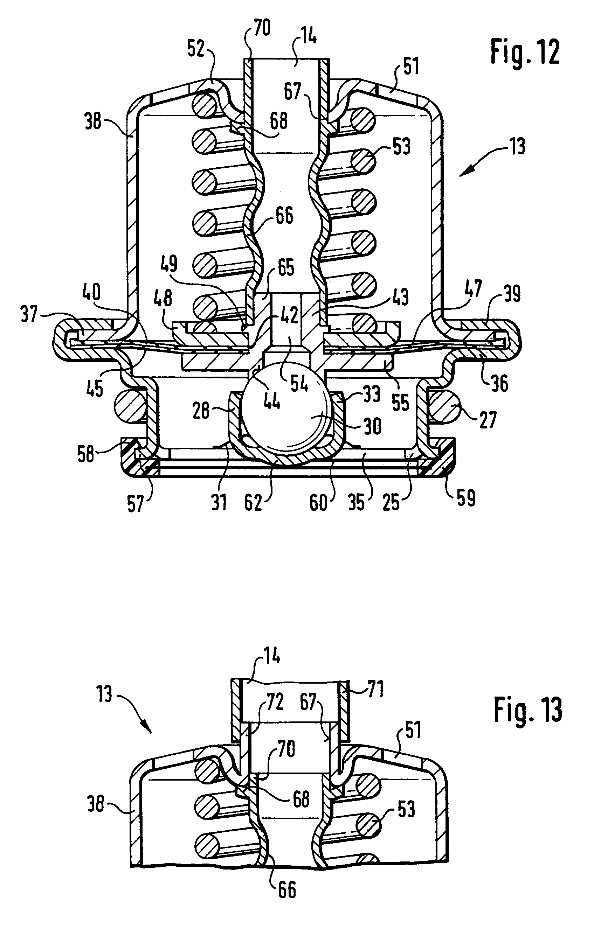

Die Figur 11 zeigt die Verwendung einer dünnen, folienartigen Metallmembran 40, die durch zusätzliche wellenförmige Bereiche elastisch nachgiebig gestaltet ist und an ihrem Umfang unter Zwischenlage einer Dichtung 63 an dem Kragen 36 des Grundkörpers 24 durch den Bördelrand 39 eingespannt ist. Die Membran 40 ist in ihrem mittleren Bereich zur Bildung der Ventilsitzfläche 44 eben ausgebildet und weist dort den Rückströmkanal 54 zur Rückströmseite 47 auf. Die Membran 40 kann jedoch auch im Bereich des Rückströmkanales 54 zur ebenen Dichtfläche 34 des kugelförmigen Ventilschließkörpers 30 hin gebogen sein, so daß an der Membran 40 in nicht dargestellter Weise eine ringförmige Ventilsitzfläche 44 gebildet wird. Zur Regelung muß lediglich als Masse die Membran bewegt werden, wodurch sich eine besonders schnelle Reaktionsgeschwindigkeit auf Druckänderungen ergibt. Die Membran arbeitet mit einer ebenen Dichtfläche 34 des kugelförmigen Ventilschließkörpers 30 zusammen, der in einem zentralen Anlagebereich 62 des Bodens 25 des Grundkörpers 24 durch eine topfförmige Haltehülse 64 gelagert wird, die mit Haltezungen 28 durch im Boden 25 vorgesehene Einströmöffnungen 35 greift und in der in Figur 7 beschriebenen Weise den Ventilschließkörper 30 mittels der Haltezungen drehbar lagert. Die Haltehülse 64 liegt mit einer Einschnürung außen an dem Boden 25 an. Eine als Druckfeder ausgebildete Spannfeder 31 zwischen dem Boden 25 und dem Ventilschließkörper 30 beaufschlagt den Ventilschließkörper 30 in Richtung zu den freien Enden 33 der Haltezungen 28, wodurch der Ventilschließkörper 30 und die Haltehülse 64 in Richtung zur Membran 40 hin gedrückt werden. Die Federeigenschaften der Membran 40 können durch die Gestaltung der wellenförmigen Bereiche beeinflußt werden. Anstatt der Bördelung am Kragen 36 des Grundkörpers 24 kann auch eine Löt- oder Schweißverbindung des Umfanges der Membran 40 mit dem Kragen 36 erfolgen.

Das Ausführungsbeispiel eines Druckregelventiles nach Figur 12 entspricht im wesentlichen dem Druckregelventil nach Figur 9, wobei jedoch zur Verminderung der Druckkraft des zurückströmenden Brennstoffes auf die Membran 40 auf einen Halteansatz 65 des Ventilsitzkörpers 43 auf seiner der Ventilsitzfläche 44 abgewandten Seite ein wellenförmig ausgebildetes Rückströmrohr 66 dicht aufgesetzt ist.

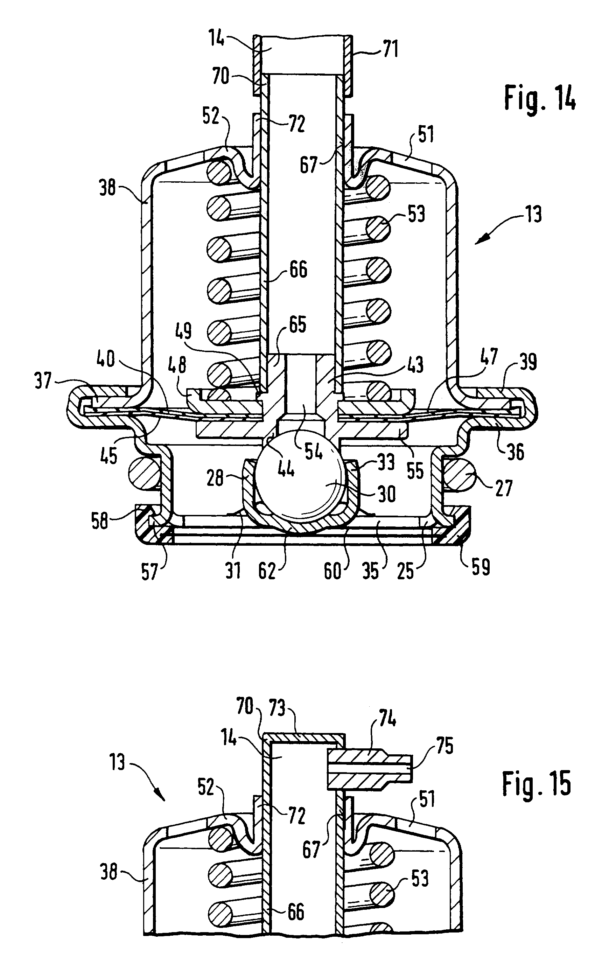

Das flexible Rückströmrohr 66 kann aus Gummi, Kunststoff, dünnem Metall oder einem anderen Material bestehen und erstreckt sich durch die Rückstellfeder 53 und eine Führungsöffnung 67 im Kappenboden 52, an dessen Innenseite das Rückströmrohr 66 mit radial sich erstreckenden Anschlägen 68 anliegen kann. Auf ein aus der Kappe 38 herausragendes Rohrende 70 kann dann, wie in den Figuren 13 und 14 gezeigt, ein Anschlußschlauch 71 dicht aufgeschoben werden, der, wie in den Figuren 1 bis 6 gezeigt, als Rückströmleitung 14 zum Brennstofftank 1 bzw. zur Tankeinbaueinheit 2 zurückführt. Diese Ausbildung mit einem Rückströmrohr ist besonders dann vorteilhaft, wenn der zurückgeleitete Brennstoff der Strahlpumpe 3 im Brennstofftank 1 zugeführt wird, da hierdurch die Rückwirkungen von Druckschwankungen im Brennstoff auf das Druckregelventil besonders klein gehalten werden können, da diese Druckschwankungen nur auf den kleinen Querschnitt des Ventilsitzkörpers 43 wirken und nicht auf den wesentlich größeren Querschnitt der Membran 40.

In der Figur 13 ist lediglich der obere Teil der Kappe 38 gezeigt, die die Führungsöffnung 67 bildend einen Rohrstutzen 72 aufweist, der aus der Kappe herausragt. Im Rohrstutzen 72 endet abgedichtet das Rohrende 70 des Rückströmrohrs 66. Auf den Rohrstutzen 72 ist der Anschlußschlauch 71 aufgesetzt.

Gegenüber den bisherigen Ausführungsbeispielen nach Figur 12 und 13 ist in Figur 14 das Rückströmrohr 66 nicht als Wellrohr ausgebildet, sondern als glattes Rohr, das mit geringem Spiel die Führungsöffnung 67 in der Kappe 38 durchragt, also in der Führungsöffnung 67 gleiten kann.

Das nur den oberen Teil der Kappe 38 darstellende Ausführungsbeispiel nach Figur 15 weicht von dem Ausführungsbeispiel nach Figur 14 lediglich dadurch ab, daß das aus der Kappe 38 herausragende Rohrende 70 mit einem Verschluß 73 versehen ist und in der zylindrischen Wandung des Rückströmrohrs 66 außerhalb der Kappe eine Strahldüse 74 vorgesehen ist, über deren Strahlkanal 75 der zurückströmende Brennstoff direkt in die Strahlpumpe 3 eingeleitet wird. Die Strahldüse 74 ist somit Teil der Strahlpumpe im Brennstofftank 1. Grundsätzlich sind auch Kombinationen der bisher beschriebenen Ausführungsbeispiele z. B. bezüglich der Filterbefestigung, der Schließelementausbildung usw. möglich.

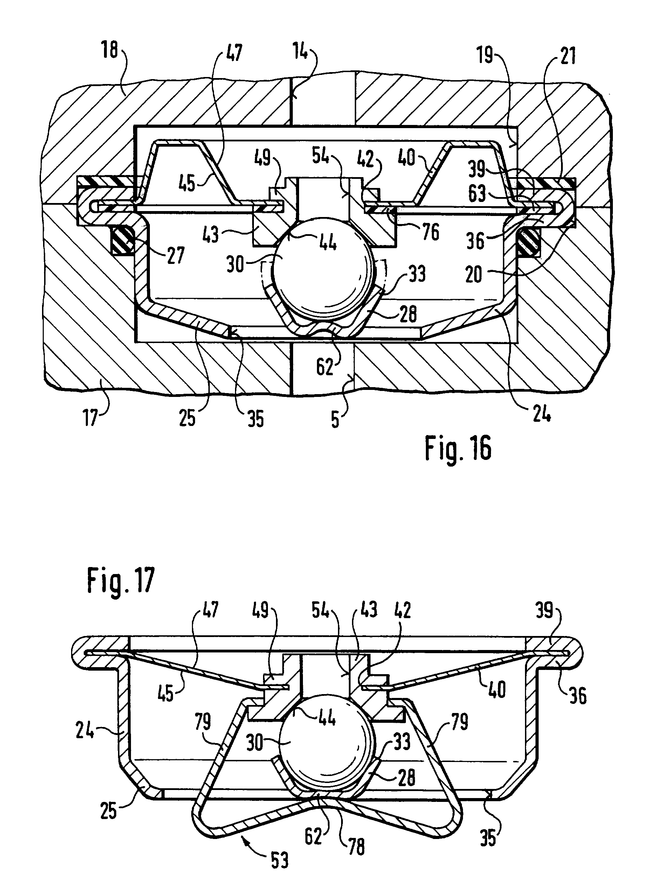

Bei dem Ausführungsbeispiel nach Figur 16 ist in dem Grundkörper 24 mittels des Kragens 36 und des Bördelrandes 39 unter Zwischenlage einer Dichtung 63 eine federnde Membran 40 aus dünnem Metall an ihrem Umfang eingespannt und derart wellenförmig gebogen, daß sie zugleich als Rückstellfeder wirkend eine Federkraft auf den Ventilsitzkörper 43 in Richtung zum Ventilschließkörper 30 hin ausübt. Der Ventilsitzkörper 43 durchgreift dabei einen Durchbruch 42 im mittleren Bereich der Membran 40 und ist gegebenenfalls unter Zwischenlage einer Dichtscheibe 76 mittels einer Verformung 49 auf der dem Ventilschließkörper 30 abgewandten Seite an der Membran 40 dicht befestigt. Die Ventilsitzfläche 44 ist konisch oder sphärisch ausgebildet. Die Haltezungen 28 umgreifen in den Figuren 16 bis 19 beispielsweise den als Kugel ausgebildeten Ventilschließkörper nicht oberhalb seines Mittelpunktes. Die Haltezungen 28 können jedoch auch bei den Ausführungsbeispielen nach den Figuren 16 bis 19 so lang ausgebildet sein, daß sie wie bei den vorhergehenden Figuren 7 bis 14 die Kugel oberhalb ihres Mittelpunktes umgreifen. Diese längeren Haltezungen 28 sind z. B. in Figur 16 gestrichelt dargestellt. Der Ventilschließkörper 30 ist zwischen den Haltezungen 28 drehbar gelagert. Durch Eindrücken des Bodens 25 des Grundkörpers 24 im zentralen Anlagebereich 62 zwischen den Haltezungen 28 kann die durch die metallene Membran 40 bewirkte Kraft und damit der zu regelnde Brennstoffdruck geändert werden. Bei diesem Ausführungsbeispiel ist keine selbständige Rückstellfeder und damit auch kein Federteller an der Membran erforderlich.

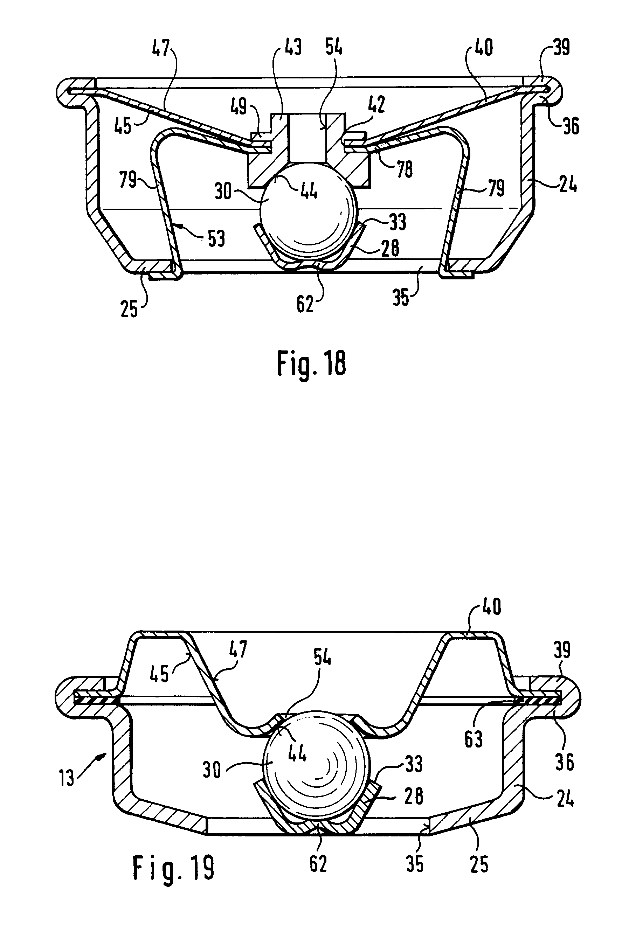

Abweichend von dem Ausführungsbeispiel nach Figur 16 ist bei dem Ausführungsbeispiel nach Figur 17 die Membran 40, die außer aus Metall auch z. B. aus Kunststoff bestehen kann, höchstens mit einer sehr geringen Federeigenschaft ausgestattet. Als Rückstellfeder 53 dient eine Zugfeder, die als Blattfeder gestaltet etwa Herzform hat und sich mit einem Querbereich 78 außerhalb des Grundkörpers 24 an dessen Boden 25 abstützt und mit Armen 79 am Ventilsitzkörper 43 angreift, um den Ventilsitzkörper 43 mit der Membran 40 in Richtung zum Ventilschließkörper 30 zu ziehen. Die Arme 79 greifen dabei durch die Einströmöffnungen 35 im Boden 25.

Auch bei dem Ausführungsbeispiel nach Figur 18 wirkt die Rückstellfeder 53 als Zugfeder auf den Ventilsitzkörper 43 und die Membran 40 in Richtung zum Ventilschließkörper 30 hin und ist blattfederförmig ausgebildet etwa in Herzform gestaltet. Abweichend von dem Ausführungsbeispiel nach Figur 17 ist jedoch der Querbereich 78 mit der Membran 40 zusammen an dem Ventilsitzkörper 43 eingespannt, und die Arme 79 greifen durch die Einströmöffnungen 35 nach außen und stützen sich am Boden 25 des Grundkörpers 24 ab.

In Figur 19 ist ein Ausführungsbeispiel eines Druckregelventils 13 gezeigt, das entsprechend Figur 11 oder 16 eine federnd aus Metall ausgebildete Membran 40 hat, die zugleich als Rückstellfeder wirkend mit einer Federkraft im geschlossenen Zustand des Druckregelventiles wie bei Figur 11 an dem Ventilschließkörper 30 anliegt. Dabei bildet die Membran 40 in ihrem mittleren Bereich eine Ventilsitzfläche 44 und von dieser ausgehend einen Rückströmkanal 54 zur Rückströmseite 47. Zur Bildung der Ventilsitzfläche 44 ist dabei die Membran 40 konisch oder sphärisch sich zur Mitte und zum Rückströmkanal 54 hin verjüngend nach oben gebogen, um in einer Art Düse am Umfang des kugelförmigen Ventilschließkörpers 30 anzuliegen.

Bei dem Ausführungsbeispiel nach Figur 20 ist in einem Oberteil 18, beispielsweise einem Brennstoffilter oder einem Haltekörper im Brennstofftank ein im wesentlichen aus Kunststoff gefertigtes Druckregelventil 13 angeordnet. Das Druckregelventil 13 hat einen aus Kunststoff ausgebildeten Grundkörper 24, dessen Wandung einen in beiden axialen Richtungen abgestuften Innenraum 94 begrenzt. Am Grundkörper 24 ist ein Kragen 36 ausgebildet, an dem die Membran 40 mit ihrem Umfang anliegt. Dem Kragen 36 abgewandt weist der Grundkörper 24 einen Lagerabschnitt 95 zur Lagerung des Ventilschließkörpers 30 auf. Hierfür hat der Lagerabschnitt 95 eine konisch zur Mittellinie 93 hin sich verjüngende ringförmige Anlagefläche 96, deren kleinster Durchmesser kleiner als der Durchmesser des kugelförmigen Ventilschließkörpers 30 ist. In Richtung zum Kragen 36 schließen sich an die Anlagefläche 96 Haltenasen 97 an, die in axialer Richtung sich bis über die Mitte des kugelförmigen Ventilschließkörpers 30 erstrecken und radial ein geringes Spiel zur Oberfläche des Ventilschließkörpers 30 haben, so daß sich der Ventilschließkörper zwischen den Haltenasen 97 drehen kann. Die Haltenasen 97 können auch auf einem umlaufenden, durchgehenden Haltering mit dem Querschnitt der Haltenasen liegen. Um bei der Montage des Ventilschließkörpers 30 ein leichteres Einrasten des kugelförmigen Ventilschließkörpers 30 in den Lagerabschnitt 95 zu ermöglichen, können zwischen den einzelnen Haltenasen 97 in der Wandung des Grundkörpers 24 zum Innenraum 94 hin offene, sich in axialer Richtung erstreckende Längsschlitze 98 vorgesehen sein. An einem dem Ventilschließkörper 30 abgewandten Bund 99 des Lagerabschnittes 95 liegt eine tellerfederförmige Spannfeder 31 mit ihrem Umfang an und ist mittels eines mit dem Lagerabschnitt 95 beispielsweise durch Ultraschallschweißen verbundenen Deckels 100 fest eingespannt. Die Spannfeder 31 ist weich ausgebildet und drückt den Ventilschließkörper 30 in Richtung zu den Haltenasen 97. Wie in Figur 22 dargestellt ist, kann der Umfang der Spannfeder 31 auch durch Umformen des Kunststoffmaterials an dem Bund 99 durch Ultraschallschweißen direkt in dem Lagerabschnitt 95 eingespannt sein. Die an dem Kragen 36 des Grundkörpers 24 anliegende Membran 40 wird an dem Kragen 36 mittels eines rohrförmigen Zwischenteiles 102 aus Kunststoff eingespannt, der mit dem Kragen 36 durch Ultraschallschweißen verbunden ist. In das Zwischenteil 102 oder über das Zwischenteil 102 ist ein topfförmiges Deckelteil 103 aus Kunststoff schiebbar, an dem das eine Ende der als Druckfeder ausgebildeten Rückstellfeder 53 angreift. Durch eine axiale Bewegung des Deckelteiles 103 gegenüber dem Zwischenteil 102 kann die Kraft der Rückstellfeder 53 verändert werden. Nach Beendigung der Federkrafteinstellung werden das Zwischenteil 102 und das Deckelteil 103 miteinander fixiert. In dem Deckelteil sind Abströmöffnungen 51 vorgesehen. Im mittleren Bereich der Membran 40 ist den Durchbruch 42 der Membran 40 durchgreifend ein aus Kunststoff gebildeter Ventilsitzkörper 43 befestigt, der mit seiner Ventilsitzfläche 44 an der Dichtfläche 34 des Ventilschließkörpers 30 anliegt und den Rückströmkanal 54 aufweist. Die Einspannung der Membran 40 an dem Ventilsitzkörper 43 kann mittels einer Einspannscheibe 104 erfolgen, die aus Kunststoff ausgebildet ist und mit dem Ventilsitzkörper 43 durch Ultraschallverschweißung verbunden wird. In einer in Figur 21 dargestellten Variante des Druckregelventils 13 nach Figur 20 wird die Membran 40 in ihrem mittleren Bereich direkt in den mittels Ultraschallverschweißung umgeformten Ventilsitzkörper 43 eingespannt. Das Druckregelventil 13 wird in dem Oberteil 18 durch eine an dem Kragen 36 angreifende metallene Zahnringscheibe 105 gehalten.

## Patentansprüche

1. Druckregelventil für Brennstoffversorgungsanlagen von Brennkraftmaschinen, mit einem Grundkörper (24), mit einer an ihrem Umfang an dem Grundkörper (24) eingespannten nachgiebigen Membran (40), die eine von dem zu regelnden Brennstoff beaufschlagte Druckregelseite (45) und dieser gegenüberliegend eine Rückströmseite (47) hat, mit einer im mittleren Bereich der Membran (40) liegenden Ventilsitzfläche (44), mit einem mit der Ventilsitzfläche (44) zusammenwirkenden kugelförmigen Ventilschließkörper (30) und mit einer in Ventilschließrichtung wirkenden Federkraft (53), wobei die Membran (40) relativ zu ihrem Umfang in ihrem mittleren Bereich mit der Ventilsitzfläche (44) auslenkbar ist und Brennstoff bei von dem Ventilschließkörper (30) abgehobener Ventilsitzfläche (44) über die Ventilsitzfläche (44) durch die Membran (40) von der Druckregelseite (45) in Richtung zur Rückströmseite (47) der Membran (40) strömen kann, dadurch gekennzeichnet, daß der Ventilschließkörper (30) direkt in einer einteilig aus dem Grundkörper (24) ausgebildeten Art Käfig (28, 95) drehbar gelagert ist.

2. Druckregelventil nach Anspruch 1, dadurch gekennzeichnet, daß der Ventilschließkörper (30) als Kugel ausgebildet ist.

3. Druckregelventil nach Anspruch 2, dadurch gekennzeichnet, daß der kugelförmige Ventilschließkörper (30) der Ventilsitzfläche(44) zugewandt eine ebene Dichtfläche (34) hat.

4. Druckregelventil nach Anspruch 2 oder 3, dadurch gekennzeichnet, daß der Grundkörper (24) als topfförmiger Blechkörper mit einem Boden (25) ausgebildet ist und aus dem Boden (25) Haltezungen (28) ausgeformt und in das Innere des Grundkörpers (24) gebogen sind, die den Ventilschließkörper (30) in Art eines Käfigs lagern.

5. Druckregelventil nach Anspruch 4, dadurch gekennzeichnet, daß zwischen dem Boden (25) des Grundkörpers (24) und dem Ventilschließkörper (30) eine Spannfeder (31) angeordnet ist, die den Ventilschließkörper (30) zur Ventilsitzfläche (44) hin beaufschlagt.

6. Druckregelventil nach einem der Ansprüche 1 bis 3, dadurch gekennzeichnet, daß mit der Membran (40) ein die Ventilsitzfläche (44) und einen von dieser zur Rückströmseite (47) führenden Rückströmkanal (54) aufweisender Ventilsitzkörper (43) verbunden ist.

7. Druckregelventil nach Anspruch 6, dadurch gekennzeichnet, daß die Ventilsitzfläche (44) eben, konisch oder sphärisch ausgebildet ist.

8. Druckregelventil nach Anspruch 6, dadurch gekennzeichnet, daß die Membran (40) auf ihrer Rückströmseite (47) durch eine zum Ventilschließkörper (30) hin wirkende Rückstellfeder (53) beaufschlagt wird.

9. Druckregelventil nach Anspruch 8, dadurch gekennzeichnet, daß die Rückstellfeder (53) als Druckfeder ausgebildet ist und mit ihrem der Membran (40) abgewandten Ende an einer Kappe (38) anliegt, die mittels eines Bördelrandes (39) mit dem Grundkörper (24) verbunden ist und die Membran (40) zwischen der Kappe (38) und dem Grundkörper (24) eingespannt ist.

10. Druckregelventil nach Anspruch 4, dadurch gekennzeichnet, daß im Boden (25) des Grundkörpers (24) Einströmöffnungen (35) ausgebildet sind und am Boden (25) ein die Einströmöffnungen (35) überdeckender Filter (59, 60) angeordnet ist.

11. Druckregelventil nach Anspruch 10, dadurch gekennzeichnet, daß der Filter (59, 60) mittels einer Rastverbindung (57, 58) am Grundkörper (24) gehalten wird.

12. Druckregelventil nach Anspruch 4, dadurch gekennzeichnet, daß zur Einstellung der Federkraft der Rückstellfeder (53) der Grundkörper (24) in Richtung zur Ventilsitzfläche (44) hin verformbar ist.

13. Druckregelventil nach Anspruch 8, dadurch gekennzeichnet, daß die Rückstellfeder (53) als Blattfeder ausgebildet ist.

14. Druckregelventil nach Anspruch 2 oder 3, dadurch gekennzeichnet, daß die Membran (40) federnd aus Metall ausgebildet und direkt mit der Ventilsitzfläche (44) und einem auf die Rückströmseite (47) führenden Rückströmkanal (54) versehen ist.

15. Druckregelventil nach Anspruch 1, dadurch gekennzeichnet, daß der Grundkörper (24) topfförmig mit einem Boden (25) ausgebildet ist, in dem um einen zentralen Anlagebereich (62) Einströmöffnungen (35) vorgesehen sind, wobei durch die Einströmöffnungen (35) Haltezungen (28) einer topfförmigen Haltehülse (64) in das Innere des Grundkörpers (24) ragen und den als Kugel ausgebildeten Ventlischließkörper (30) am zentralen Anlagebereich (62) drehbar lagern.

16. Druckregelventil nach Anspruch 6, dadurch gekennzeichnet, daß auf der Rückströmseite (47) der Membran (40) abgedichtet mit dem Ventilsitzkörper (43) ein dünnwandiges Rückströmrohr (66) verbunden ist.

17. Druckregelventil nach Anspruch 16, dadurch gekennzeichnet, daß das dünnwandige Rückströmrohr (66) mit einer im Brennstofftank (1) angeordneten Strahlpumpe (3) an der Ansaugseite einer Brennstoffpumpe (4) in Verbindung steht.

18. Druckregelventil nach Anspruch 6, dadurch gekennzeichnet, daß die Membran (40) federnd aus Metall ausgebildet ist.

19. Druckregelventil nach Anspruch 6, dadurch gekennzeichnet, daß dem Ventilschließkörper (30) zugewandt an dem Ventilsitzkörper (43) als Rückstellfeder (53) dienend eine blattfederförmige Zugfeder angreift, die sich am Grundkörper (24) abstützt.

20. Druckregelventil nach Anspruch 14, dadurch gekennzeichnet, daß die Membran (40) in ihrem die Ventilsitzfläche (44) bildenden mittleren Bereich eben ausgeführt ist.

21. Druckregelventil nach Anspruch 14, dadurch gekennzeichnet, daß die Membran (40) in ihrem die Ventilsitzfläche (44) bildenden mittleren Bereich konisch oder sphärisch sich zum Rückströmkanal (54) verjüngend gebogen ist.

22. Druckregelventil nach Anspruch 1, 2 oder 3, dadurch gekennzeichnet, daß der Grundkörper (24) aus Kunststoff ausgebildet ist und einen Kragen (36), an dem die Membran (40) mit ihrem Umfang anliegt, sowie dem Kragen (36) abgewandt einen Lagerabschnitt (95) in Art eines Käfigs zur Lagerung des Ventilschließkörpers (30) hat.

23. Druckregelventil nach Anspruch 22, dadurch gekennzeichnet, daß der Lagerabschnitt (95) elastische Haltenasen (97) hat, die einen Kreisquerschnitt mit geringerem Radius begrenzen als den Radius des Ventilschließkörpers (30).

24. Druckregelventil nach Anspruch 23, dadurch gekennzeichnet, daß auf der der Membran (40) abgewandten Seite des Ventilschließkörpers (30) eine Spannfeder (31) angreift und den Ventilschließkörper (30) in Richtung zu den Haltenasen (97) hin beaufschlagt.

25. Druckregelventil nach Anspruch 22, dadurch gekennzeichnet, daß die Membran (40) an dem Kragen (36) des Grundkörpers (24) mittels eines rohrförmigen Zwischenteiles (102) aus Kunststoff eingespannt ist und dem Grundkörper (24) abgewandt an dem Zwischenteil (102) ein topfförmiges Deckelteil (103) aus Kunststoff angreift, das relativ zum Zwischenteil (102) axial bewegbar und an diesem fixierbar ist.

26. Druckregelventil nach Anspruch 25, dadurch gekennzeichnet, daß im mittleren Bereich mit der Membran (40) ein Ventilsitzkörper (43) aus Kunststoff mit der Membran (40) verbunden ist und der Ventilsitzkörper (43) eine Ventilsitzfläche (44) und einen von dieser zur Rückströmseite (47) führenden Rückströmkanal (54) aufweist.

27. Druckregelventil nach Anspruch 26, dadurch gekennzeichnet, daß zwischen dem Deckelteil (103) und dem Ventilsitzkörper (43) eine als Druckfeder ausgebildete Rückstellfeder (53) angeordnet ist.

## Claims

1. Pressure regulating valve for fuel supply systems of internal combustion engines, with a basic body (24), with a resilient diaphragm (40) which is clamped at its circumference to the basic body (24) and which has a pressure regulating side (45) loaded by the fuel to be regulated and, opposite this side, a backflow side (47), with a valve seat surface (44) located in the middle region of the diaphragm (40), with a spherical valve closing body (30) cooperating with the valve seat surface (44), and with a spring force (53) acting in the valve closing direction, the diaphragm (40) being deflectable relative to its circumference in its middle region having a valve seat surface (44), and, with the valve seat surface (44) lifted off from the valve closing body (30), fuel being capable of flowing via the valve seat surface (44) through the diaphragm (40) from the pressure regulating side (45) in the direction of the backflow side (47) of the diaphragm (40), characterized in that the valve closing body (30) is rotatably mounted directly in a type of cage (28, 95) formed in one piece from the basic body (24).

2. Pressure regulating valve according to Claim 1, characterized in that the valve closing body (30) is in the form of a sphere.

3. Pressure regulating valve according to Claim 2, characterized in that the spherical valve closing body (30) has, facing the valve seat surface (44), a plane sealing surface (34).

4. Pressure regulating valve according to Claim 2 or 3, characterized in that the basic body (24) is designed as a pot-shaped sheet-metal body with a bottom (25), and holding tongues (28) are shaped out at the bottom (25) and bent into the interior of the basic body (24), said holding tongues providing a mounting for the valve closing body (30) in the manner of a cage.

5. Pressure regulating valve according to Claim 4, characterized in that between the bottom (25) of the basic body (24) and the valve closing body (30) is arranged a tension spring (31) which loads the valve closing body (30) towards the valve seat surface (44).

6. Pressure regulating valve according to one of Claims 1 to 3, characterized in that a valve seat body (43) having the valve seat surface (44) and a backflow duct (54) leading from the latter to the backflow side (47) is connected to the diaphragm (40).

7. Pressure regulating valve according to Claim 6, characterized in that the valve seat surface (44) is in plane, conical or spherical form.

8. Pressure regulating valve according to Claim 6, characterized in that the diaphragm (40) is loaded on its backflow side (47) by a return spring (53) acting towards the valve closing body (30).

9. Pressure regulating valve according to Claim 8, characterized in that the return spring (53) is designed as a compression spring and bears with its end facing away from the diaphragm (40) against a cap (38) which is connected to the basic body (24) by means of a crimped edge (39), and the diaphragm (40) is clamped between the cap (38) and the basic body (24).

10. Pressure regulating valve according to Claim 4, characterized in that inflow orifices (35) are formed in the bottom (25) of the basic body (24), and a filter (59, 60) covering the inflow orifices (35) is arranged on the bottom (25).

11. Pressure regulating valve according to Claim 10, characterized in that the filter (59, 60) is held on the basic body (24) by means of a catch connection (57, 58).

12. Pressure regulating valve according to Claim 4, characterized in that, in order to set the spring force of the return spring (53), the basic body (24) is capable of being deformed in the direction of the valve seat surface (44).

13. Pressure regulating valve according to Claim 8, characterized in that the return spring (53) is designed as a leaf spring.

14. Pressure regulating valve according to Claim 2 or 3, characterized in that the diaphragm (40) is produced resiliently from metal and is provided directly with the valve seat surface (44) and with a backflow duct (54) leading to the backflow side (47).

15. Pressure regulating valve according to Claim 1, characterized in that the basic body (24) is of pot-shaped design with a bottom (25), in which inflow orifices (35) are provided around a central bearing region (62), holding tongues (28) of a pot-shaped holding sleeve (64) projecting through the inflow orifices (35) into the interior of the basic body (24) and providing a rotatable mounting for the spherical valve closing body (30) on the central bearing region (62).

16. Pressure regulating valve according to Claim 6, characterized in that a thin-walled backflow tube (66) is connected, sealed off, to the valve seat body (43) on the backflow side (47) of the diaphragm (40).

17. Pressure regulating valve according to Claim 16, characterized in that the thin-walled backflow tube (66) is connected, on the suction side of a fuel pump (4) to a jet pump (3) arranged in the fuel tank (1).

18. Pressure regulating valve according to Claim 6, characterized in that the diaphragm (40) is produced resiliently from metal.

19. Pressure regulating valve according to Claim 6, characterized in that a tension spring in the form of a leaf spring, which serves as a return spring (53) and is supported on the basic body (24), engages on the valve seat body (43) on the side facing the valve closing body (30).

20. Pressure regulating valve according to Claim 14, characterized in that the diaphragm (40) is of plane design in its middle region forming the valve seat surface (44).

21. Pressure regulating valve according to Claim 14, characterized in that the diaphragm (40), in its middle region forming the valve seat surface (44), is bent so as to taper conically or spherically towards the backflow duct (54).

22. Pressure regulating valve according to Claim 1, 2 or 3, characterized in that the basic body (24) is produced from plastic and has a collar (36), against which the diaphragm (40) bears with its circumference, and, facing away from the collar (36), a bearing portion (95) in the manner of a cage for mounting the valve closing body (30).

23. Pressure regulating valve according to Claim 22, characterized in that the bearing portion (95) has elastic holding noses (97) which delimit a circular cross section having a smaller radius than the radius of the valve closing body (30).

24. Pressure regulating valve according to Claim 23, characterized in that a tension spring (31) engages on that side of the valve closing body (30) which faces away from the diaphragm (40) and loads the valve closing body (30) in the direction of the holding noses (97).

25. Pressure regulating valve according to Claim 22, characterized in that the diaphragm (40) is clamped to the collar (36) of the basic body (24) by means of a tubular intermediate part (102) made of plastic and, facing away from the basic body (24), a pot-shaped cover part (103) made of plastic engages on the intermediate part (102) and is capable of being moved axially relative to the intermediate part (102) and of being fixed to the latter.

26. Pressure regulating valve according to Claim 25, characterized in that, in the middle region having the diaphragm (40), a valve seat body (43) made of plastic is connected to the diaphragm (40), and the valve seat body (43) has a valve seat surface (44) and a backflow duct (54) leading from the latter to the backflow side (47).

27. Pressure regulating valve according to Claim 26, characterized in that a return spring (53) designed as a compression spring is arranged between the cover part (103) and the valve seat body (43).

## Revendications

1. Soupape de régulation de pression pour des installations d'alimentation en carburant de moteurs à combustion interne comprenant
• un corps de base (24),
• une membrane souple (40) fixée par sa périphérie sur le corps de base (24), cette membrane ayant un côté de régulation de pression (45) sollicité par le carburant à réguler et de l'autre côté un côté de retour de carburant (47),
• une surface formant siège de soupape (44), dans la zone centrale de la membrane (40),
• un organe d'obturation de soupape (30), en forme de bille, coopérant avec la surface formant siège de soupape (44) et
• une force de ressort (53) agissant dans le sens de fermeture de la soupape, dans laquelle la membrane (40) par rapport à sa périphérie, est articulée dans la zone centrale avec la surface formant siège de soupape (44) et lorsque la surface formant siège de soupape (44) est soulevée par rapport à l'organe d'obturation (30), le carburant peut passer par la surface formant siège de soupape (44) à travers la membrane (40), du côté de régulation de pression (45) en direction du côté de retour (47) de la membrane (40),
caractérisée en ce que
l'organe d'obturation (30) est monté à rotation directement dans une sorte de cage (28, 95) réalisée en une seule pièce dans le corps de base (24).

2. Soupape de régulation de pression selon la revendication 1,
caractérisée en ce que
l'organe d'obturation (30) est une bille.

3. Soupape de régulation de pression selon la revendication 2,
caractérisée en ce que
l'organe d'obturation (30) en forme de bille possède une surface d'étanchéité (34) plane du côté tourné vers la surface formant siège de soupape (44).

4. Soupape de régulation de pression selon la revendication 2 ou 3,
caractérisée en ce que
le corps de base (24) est un corps en tôle, en forme de pot avec un fond (25) et des languettes de fixation (28) sont déformées à partir du fond (25) en étant recourbées vers l'intérieur du corps de base (24) pour recevoir l'organe d'obturation (30) en formant une sorte de cage.

5. Soupape de régulation selon la revendication 4,
caractérisée par
un ressort de tension (31) intercalé entre le fond (25) du corps de base (24) et l'organe d'obturation (30), ce ressort sollicitant l'organe d'obturation (30) en direction de la surface formant siège de soupape (44).

6. Soupape de régulation selon l'une des revendications 1 à 4,
caractérisée en ce qu'
un corps formant siège de soupape (43) est relié à la membrane (40), ce corps ayant la surface formant siège de soupape (44) et un canal de retour (54) allant de cette surface jusqu'au côté de retour (47).

7. Soupape de régulation selon la revendication 6,
caractérisée en ce que
la surface formant siège de soupape (44) est de forme plane, conique ou sphérique.

8. Soupape de régulation selon la revendication 6,
caractérisée en ce que
la membrane (40) est sollicitée sur son côté de retour (47) par un ressort de rappel (53) agissant sur l'organe d'obturation (30).

9. Soupape de régulation selon la revendication 8,
caractérisée en ce que
le ressort de rappel (53) est un ressort de compression s'appuyant contre un capuchon (38) par son extrémité opposée à la membrane (40), ce capuchon étant relié au corps de base (24) par un bord serti (39) et la membrane (40) est fixée entre le capuchon (38) et le corps de base (24).

10. Soupape de régulation selon la revendication 4,
caractérisée en ce que
des orifices d'entrée (35) sont réalisés dans le fond (25) du corps de base (24) et un filtre (59, 60) recouvrant les orifices d'entrée (35) est monté sur le fond (25).

11. Soupape de régulation selon la revendication 10,
caractérisée en ce que
le filtre (59, 60) est maintenu sur le corps de base (24) par l'intermédiaire d'une liaison par accrochage (57, 58).

12. Soupape de régulation selon la revendication 4,
caractérisée en ce que
le corps de base (24) est déformable en direction de la surface formant siège de soupape (44) pour régler la force développée par le ressort de rappel (53).

13. Soupape de régulation selon la revendication 8,
caractérisée en ce que
le ressort de rappel (53) est un ressort-lame.

14. Soupape de régulation selon la revendication 2 ou 3,
caractérisée en ce que
la membrane (40) est élastique, en métal, et comporte un canal de retour (54) directement au niveau de la surface formant siège (44) et conduisant vers le côté de retour (47).

15. Soupape de régulation selon la revendication 1,
caractérisée en ce que
le corps de base (24) a la forme d'un pot avec un fond (25) dans lequel il y a des orifices d'entrée (35) répartis autour d'une zone d'appui (62) centrale, des languettes de fixation (28) d'un manchon de fixation (64) en forme de pot venant en saillie à l'intérieur du corps de base (24) à travers les orifices d'entrée (35), et logeant l'organe d'obturation (30), réalisé en forme de bille et monté rotatif, dans la zone d'appui centrale (62).

16. Soupape de régulation selon la revendication 6,
caractérisée en ce que
du côté de retour (47) de la membrane (40) un tube de retour (66) à paroi mince est relié de façon étanche au corps formant siège (43).

17. Soupape de régulation selon la revendication 16,
caractérisée en ce que
le tube de retour (66) à paroi mince est relié à une pompe à jet (3) placée dans le réservoir de carburant (1), la liaison étant faite sur le côté d'aspiration d'une pompe à carburant (4).

18. Soupape de régulation selon la revendication 6,
caractérisée en ce que
la membrane (40) élastique est en métal.

19. Soupape de régulation selon la revendication 6,
caractérisée en ce que
le corps formant siège de soupape (43) comporte comme ressort de rappel (53), tourné vers l'organe d'obturation (30), un ressort de traction en forme de ressort-lame qui s'appuie sur le corps de base (24).

20. Soupape de régulation selon la revendication 14,
caractérisée en ce que
la partie centrale de la membrane (40) formant la surface de siège de soupape (44) est plane.

21. Soupape de régulation selon la revendication 14,
caractérisée en ce que
la partie centrale de la membrane (40) formant la surface de siège de soupape (44) est de forme conique ou sphérique allant en se rétrécissant vers le canal de retour (54).

22. Soupape de régulation de pression selon la revendication 1, 2 ou 3,
caractérisée en ce que
le corps de base (24) est en matière plastique et comporte une collerette (36) contre laquelle s'appuie la périphérie de la membrane (40) ainsi qu'un segment de support (95), opposé à la collerette (36), et formant une sorte de cage pour recevoir l'organe d'obturation (30).

23. Soupape de régulation de pression selon la revendication 22,
caractérisée en ce que
le segment de support (95) possède des becs de fixation élastiques (97) délimitant une section circulaire de rayon plus faible que celui de l'organe d'obturation (30).

24. Soupape de régulation de pression selon la revendication 23,
caractérisée en ce que
du côté de l'organe d'obturation (30), non tourné vers la membrane (40), agit un ressort de tension (31) sollicitant l'organe d'obturation (30) en direction des becs de fixation (97).

25. Soupape de régulation de pression selon la revendication 22,
caractérisée en ce que
la membrane (40) est fixée sur la collerette (36) du corps de base (24) à l'aide d'une pièce intermédiaire tubulaire (102) en matière plastique et du côté opposé au corps de base (24), la pièce intermédiaire (102) reçoit un couvercle (103) en forme de pot, en matière plastique, mobile axialement par rapport à la pièce intermédiaire (102) et qui peut se bloquer par rapport à celle-ci.

26. Soupape de régulation de pression selon la revendication 25,
caractérisée en ce qu'
un corps formant siège de soupape (43) en matière plastique est relié à la membrane (40) dans sa partie centrale et le corps formant siège de soupape (43) possède une surface formant siège de soupape (44) et un canal de retour (54) conduisant de la surface formant siège vers le côté de retour de carburant (47).

27. Soupape de régulation de pression selon la revendication 26,
caractérisée par
un ressort de rappel (53) en forme de ressort de compression placé entre le couvercle (103) et le corps formant siège de soupape (43).
